# DEMANDE DE BREVET EUROPEEN

(11) **EP 2 505 110 A1**
(43) Date de publication de la demande: **03.10.2012**
(21) Numéro de dépôt: 11305354.0
(22) Date de dépôt: 29.03.2011
(51) Int. Cl.: A47J 43/25

(54) **Dispositif pour râper un produit alimentaire, notamment du fromage**

(71) Demandeur: Birambeau, 75012 Paris (FR)
(72) Inventeur: Borel, Christian, 75012, Paris (FR)
(74) Mandataire: Bonnet, Michel

(57) **Abrégé**

Ce dispositif (10) pour râper un produit alimentaire, notamment du fromage, comporte :
- un corps (12) délimitant une chambre cylindrique (18) s'étendant autour d'un axe principal (A) et un réceptacle (17) destiné à recevoir le produit alimentaire à râper, le réceptacle comportant un fond présentant un passage vers la chambre cylindrique,
- un tambour (20), disposé dans la chambre cylindrique (18) et libre en rotation autour de l'axe principal (A), comportant une paroi cylindrique râpeuse (22) contre laquelle le produit alimentaire est destiné à venir en contact grâce au passage.

Il comporte en outre un organe mobile (52) destiné à coulisser dans le réceptacle (17) et des moyens (60) de poussée de l'organe mobile (52) vers le fond du réceptacle (17).

## Description

La présente invention concerne un dispositif pour râper un produit alimentaire, notamment du fromage.

Elle s'applique plus particulièrement à un dispositif comportant :
- un corps délimitant :
   ● une chambre cylindrique s'étendant autour d'un axe principal, et
   ● un réceptacle, destiné à recevoir le produit alimentaire à râper, comportant un fond présentant un passage vers la chambre cylindrique,
- un tambour, disposé dans la chambre cylindrique et libre en rotation autour de l'axe principal, comportant une paroi cylindrique râpeuse contre laquelle le produit alimentaire est destiné à venir en contact grâce au passage.

Un tel dispositif est bien connu notamment pour râper du fromage : il est alors généralement appelé moulin à fromage. Un exemple de moulin à fromage est décrit dans la demande de brevet européen publiée sous le numéro EP 1 417 919.

Dans ce document, le tambour est muni d'une manivelle actionnée par une main d'un utilisateur, tandis que celui-ci maintient le dispositif avec son autre main. Plus précisément, le dispositif se présente sous la forme générale d'une pince, l'extrémité libre d'un premier levier de la pince étant solidaire du corps alors que l'extrémité libre du second levier de la pince comporte une surface de contact destinée à s'introduire dans le réceptacle pour faire pression sur un produit alimentaire disposé contre la paroi cylindrique râpeuse du tambour. Ainsi, pour râper le produit alimentaire introduit dans le réceptacle, l'utilisateur doit exercer d'une main une pression sur les deux leviers en les rapprochant, ce qui a pour double effet de maintenir le corps du dispositif et de comprimer le produit alimentaire dans le réceptacle contre la paroi cylindrique râpeuse, tandis qu'il actionne la manivelle du tambour de son autre main. Ce principe de fonctionnement ne permet pas d'assurer aisément une bonne stabilité de l'ensemble. Notamment, le produit alimentaire râpé s'échappant librement du dispositif par l'intérieur du tambour, il n'est pas toujours aisé de le diriger précisément vers l'endroit visé.

Il peut ainsi être souhaité de prévoir un dispositif pour râper un produit alimentaire qui permette de s'affranchir d'au moins une partie des problèmes et contraintes précités.

L'invention a donc pour objet un dispositif pour râper un produit alimentaire, notamment du fromage, comportant :
- un corps délimitant :
   ● une chambre cylindrique s'étendant autour d'un axe principal, et
   ● un réceptacle, destiné à recevoir le produit alimentaire à râper, comportant un fond présentant un passage vers la chambre cylindrique,
- un tambour, disposé dans la chambre cylindrique et libre en rotation autour de l'axe principal, comportant une paroi cylindrique râpeuse contre laquelle
le produit alimentaire est destiné à venir en contact grâce au passage, caractérisé en ce qu'il comporte un organe mobile destiné à coulisser dans le réceptacle et des moyens de poussée de l'organe mobile vers le fond du réceptacle.

Ainsi, le dispositif comportant ses propres moyens de poussée d'un organe mobile coulissant dans le réceptacle vers le fond, la fonction de pression sur le produit alimentaire dans le réceptacle n'a pas besoin d'être exercée par l'utilisateur. Libéré de cette fonction, l'utilisateur peut maintenir le dispositif d'une main avec une stabilité améliorée tandis qu'il procède au râpage de l'autre main.

De façon optionnelle, le réceptacle comporte une ouverture, disposée à l'opposé du fond, par laquelle le produit alimentaire est destiné à être introduit, le dispositif comportant en outre un couvercle amovible couvrant l'ouverture et muni de moyens de fixation amovible sur le corps, ce couvercle comportant l'organe mobile et les moyens de poussée de l'organe mobile vers le fond du réceptacle.

Ce mode de réalisation rend le principe de fonctionnement du dispositif particulièrement aisé. L'utilisateur introduit le produit alimentaire par l'ouverture puis ferme cette ouverture à l'aide du couvercle amovible. C'est alors ce couvercle, fixé sur le corps, qui remplit la fonction de pression sur le produit alimentaire dans le réceptacle. L'utilisateur peut ainsi par exemple maintenir fermement le dispositif par son corps dans la portion entourant le réceptacle sans gêner l'opération de râpage.

De façon optionnelle également, les moyens de fixation du couvercle sur le corps du dispositif comportent des moyens d'emboîtage élastique du couvercle dans le réceptacle. Cela permet de fixer et ôter simplement et rapidement le couvercle.

De façon optionnelle également, les moyens de poussée comportent des moyens de rappel élastique comprimés entre le fond du couvercle et l'organe mobile, notamment entre le fond du couvercle et une extrémité de contact de l'organe mobile destinée à exercer une pression sur le produit alimentaire dans le réceptacle.

Ces moyens de rappel élastique comportent par exemple un ressort conçu pour exercer une poussée maximale de force comprise entre 15 et 30 Newton en position comprimée, notamment une poussée maximale de force comprise entre 15 et 19 Newton.

La force de la poussée maximale exercée par le ressort doit en effet être suffisamment forte pour faire efficacement pression sur le produit alimentaire à râper, mais également suffisamment faible pour ne pas présenter de danger particulier à l'utilisation.

De façon optionnelle également, l'extrémité de contact de l'organe mobile présente une forme correspondant à celle du fond du réceptacle en communication avec la chambre cylindrique. Ainsi, c'est bien tout le produit alimentaire qui est poussé vers le tambour.

De façon optionnelle également, le corps du dispositif comporte un indicateur de quantité maximale de produit alimentaire pouvant être introduit dans le réceptacle, cet indicateur indiquant une position de l'extrémité de contact de l'organe mobile en position rétractée de compression maximale des moyens de rappel élastique lorsque le couvercle est fixé sur le corps.

De façon optionnelle également :
- le couvercle comporte un organe principal fixe s'étendant à l'intérieur du réceptacle, muni des moyens de fixation sur le corps, et
- l'organe mobile est monté libre en translation dans l'organe principal fixe entre une position rétractée de compression maximale des moyens de rappel élastique et une position développée de contact, contre au moins une butée formée dans l'organe principal fixe, d'une extrémité de l'organe mobile opposée à son extrémité de contact.

De façon optionnelle également, l'organe principal fixe du couvercle amovible comporte deux pièces rapportées l'une contre l'autre par collage ou vissage, à l'intérieur desquelles sont disposés les moyens de rappel élastique, la butée et l'extrémité de l'organe mobile opposée à son extrémité de contact. Ce mode de réalisation permet une fabrication et un assemblage simples des différents éléments composant le couvercle.

De façon optionnelle également, l'une des bases circulaires de la paroi cylindrique râpeuse du tambour est munie d'une manivelle pour l'entraînement en rotation du tambour autour de l'axe principal de la chambre cylindrique.

L'invention sera mieux comprise à l'aide de la description qui va suivre, donnée uniquement à titre d'exemple et faite en se référant aux dessins annexés dans lesquels :
- la figure 1 représente schématiquement en perspective et en vue éclatée les différents éléments d'un dispositif pour râper un produit alimentaire selon un mode de réalisation de l'invention,
- la figure 2 est une coupe du dispositif pour râper de la figure 1, en configuration assemblée et selon un plan (y, z) défini sur la figure 1, et
- la figure 3 est une coupe du dispositif pour râper de la figure 1, en configuration assemblée et selon un plan (x, z) défini sur la figure 1.

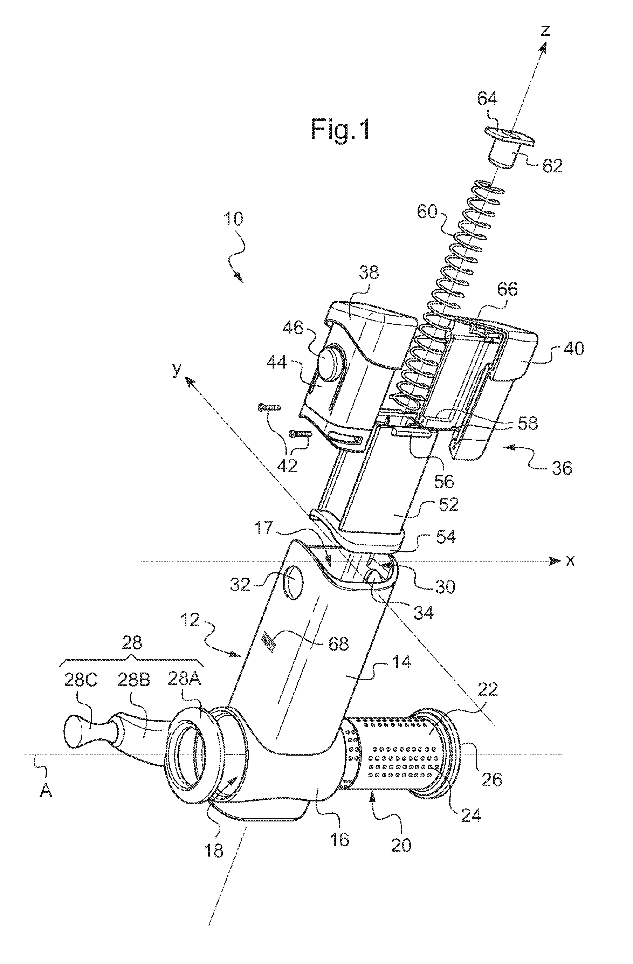

Le dispositif 10 pour râper un produit alimentaire représenté en perspective éclatée sur la figure 1 comporte plusieurs éléments destinés à être assemblés les uns aux autres. Il s'agit, à titre d'exemple non limitatif, d'un moulin à fromage utilisant le principe de l'actionnement d'un tambour à paroi cylindrique râpeuse contre laquelle est comprimé un morceau de fromage pour produire du fromage râpé.

Ce moulin à fromage 10 comporte un corps 12 par exemple moulé dans une matière plastique dure, transparente et alimentaire telle que de l'Acrylonitrile Butadiène Styrène (ABS), du PolyCarbonate (PC), du Styrène AcryloNitrile (SAN), du PolyEthylène (PE) ou du PolyStyrène (PS). Le corps 12 peut être conçu en un seul élément moulé ou, pour faciliter sa fabrication, en plusieurs éléments moulés rapportés. Il est de la forme générale d'une combinaison :
- d'une première portion 14 essentiellement parallélépipédique aux arêtes arrondies dont l'axe longitudinal est représenté sur la figure 1 comme l'axe z d'un référentiel (x, y, z), et
- d'une seconde portion cylindrique 16, de longueur et diamètre légèrement supérieurs aux dimensions latérales (i.e. selon les axes x et y) de la première portion 14, disposée à la base de cette dernière et dont l'axe principal A est perpendiculaire à l'axe z (et de même direction que l'axe x dans la représentation de la figure 1).

Dans l'exemple illustré sur la figure 1, la base de la première portion 14 s'étend légèrement au delà de la seconde portion 16 pour former des moyens de positionnement du moulin à fromage 10 sur un support plan.

La forme générale du corps 12 permet de définir, en partie supérieure de la première portion 14, un réceptacle 17 essentiellement parallélépipédique et, communicant avec le réceptacle 17 au fond de ce dernier, une chambre cylindrique 18 s'étendant autour de l'axe principal A. La forme essentiellement parallélépipédique du réceptacle 17 est adaptée pour recevoir en particulier des morceaux de fromage, tandis que celle, cylindrique, de la chambre 18 est conçue pour recevoir un tambour 20 de diamètre légèrement inférieur à celui de la seconde portion 16.

Le tambour 20, ainsi disposé dans la chambre cylindrique 18 et libre en rotation autour de l'axe principal A, comporte une paroi cylindrique râpeuse 22 contre laquelle un morceau de fromage introduit dans le réceptacle 17 est destiné à venir en contact grâce au passage formé par l'intersection des première et seconde portions 14, 16. Cette paroi cylindrique râpeuse 22 est percée d'une pluralité de trous, plus précisément une pluralité de gouges externes 24 réparties sur sa surface permettant ainsi le râpage du fromage et la libération de vermicelles de fromage à l'intérieur du tambour 20. Elle est par exemple formée dans un matériau métallique inoxydable.

Pour des raisons esthétiques mais également pour remplir une fonction de protection en raison des bords éventuellement coupants de la paroi cylindrique, le tambour 20 comporte une protection annulaire 26 en matière plastique dure (ABS, PC, SAN, PE, PS, etc.) surmoulée sur l'une des bases circulaires de la paroi cylindrique râpeuse 22. Il comporte en outre une manivelle 28, par exemple formée dans la même matière plastique que la protection annulaire 26 et surmoulée sur l'autre des bases circulaires de la paroi cylindrique râpeuse 22. La manivelle 28 comporte un anneau 28A, qui peut être identique à la protection annulaire 26, à partir duquel s'étend un bras 28B, ce dernier comportant une poignée 28C à son extrémité libre. Elle permet ainsi l'entraînement en rotation du tambour 20 autour de l'axe principal A de la chambre cylindrique 18.

Le corps 12 présente en outre, en partie supérieure du réceptacle 17 par rapport à l'axe z, une ouverture 30, disposée à l'opposé du fond (non visible sur la figure 1) du réceptacle 17. C'est par cette ouverture 30 que le fromage, plus généralement tout produit alimentaire apte à être râpé, est introduit dans le réceptacle 17.

Enfin, le corps 12 comporte deux trous traversants 32 et 34 disposés en vis-à-vis sur la paroi latérale de sa première portion 14 au voisinage de l'ouverture 30. La fonction de ces deux trous est précisée ci-dessous.

En effet, le moulin à fromage 10 comporte en outre un couvercle amovible 36 couvrant l'ouverture 30 et muni de moyens de fixation amovible sur le corps 12, par exemple des moyens d'emboîtage élastique du couvercle 36 dans le réceptacle 17, coopérant avec les deux trous 32 et 34.

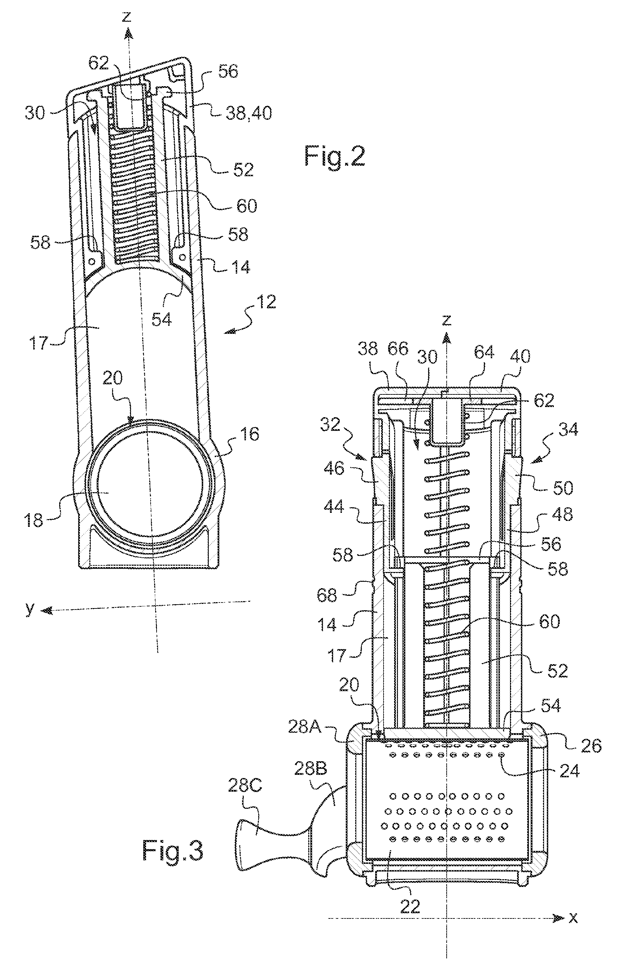

Plus précisément, le couvercle 36 comporte un organe principal fixe 38, 40 s'étendant à l'intérieur du réceptacle 17 lorsque le couvercle 36 est fixé sur le corps 12. Cet organe principal fixe comporte deux pièces 38 et 40 rapportées l'une contre l'autre par collage ou vissage. Elles sont par exemple également en matière plastique dure (ABS, PC, SAN, PE, PS, etc.). La figure 1 illustre en particulier le vissage de ces deux pièces 38, 40 à l'aide de deux vis 42. La première pièce 38 comporte une première languette 44 formée dans sa paroi latérale et portant un premier ergot circulaire 46 qui vient automatiquement se loger par emboîtage élastique dans le trou traversant 32 lorsque le couvercle 36 est inséré dans le réceptacle 17. De même, la seconde pièce 40 comporte une seconde languette 48 (non visible sur la figure 1, mais visible sur la figure 3) formée dans sa paroi latérale et portant un ergot circulaire 50 (non visible sur la figure 1, mais visible sur la figure 3) qui vient automatiquement se loger par emboîtage élastique dans le trou traversant 34 lorsque le couvercle 36 est inséré dans le réceptacle 17.

Les moyens de fixation amovible du couvercle 36 sur le corps 12 sont donc constitués des moyens d'emboîtage élastique 44, 46, 48, 50 coopérant avec les deux trous traversants 32 et 34.

Le couvercle 36 comporte en outre un organe mobile 52 de forme parallélépipédique monté libre en translation le long de l'axe z dans l'organe principal fixe 38, 40. Les deux pièces 38 et 40 de l'organe principal sont par exemple munies de nervures de guidage aménagées dans leurs faces internes pour accompagner ce mouvement de translation qui induit un coulissement de l'organe mobile 52 dans le réceptacle 17.

L'organe mobile 52 est par exemple également fabriqué en matière plastique dure (ABS, PC, SAN, PE, PS, etc.). Il comporte une première extrémité de contact 54 se trouvant à l'extérieur de l'organe principal fixe 38, 40 et dont la forme correspond à celle du fond du réceptacle 17 en communication avec la chambre cylindrique 18. Plus précisément, l'extrémité de contact 54 est une portion cylindrique de forme rectangulaire aux angles arrondis, remplissant ainsi quasiment les dimensions latérales intérieures du réceptacle 17. Sa fonction est de faire pression sur le fromage à râper introduit dans le réceptacle 17 contre la paroi cylindrique râpeuse 22.

L'organe mobile 52 comporte une seconde extrémité de butée 56 se trouvant à l'intérieur de l'organe principal fixe 38, 40 et comportant des saillies destinées à limiter son déplacement en translation par un contact contre des butées 58 correspondantes formées à l'intérieur de l'organe principal fixe 38, 40.

Enfin, le couvercle 36 comporte des moyens de poussée de l'organe mobile 52 vers le fond du réceptacle 17. Ces moyens de poussée sont par exemple des moyens de rappel élastique, notamment un ressort 60 s'étendant le long de l'axe z. Le ressort 60 est par exemple un ressort cylindrique métallique ou plastique de compression.

Dans le mode de réalisation illustré, le ressort 60 est comprimé, à l'intérieur du couvercle 36, entre le fond du couvercle, c'est-à-dire le fond de l'organe principal fixe 38, 40, et l'extrémité de contact 54 de l'organe mobile 52, ce dernier étant creux. Pour maintenir un bon positionnement du ressort le long de l'axe z, des éléments de guidage peuvent être prévus à l'intérieur de l'organe mobile 52, mais en outre il est prévu un pion 62 autour duquel est positionné le ressort 60, ce pion 62 reposant sur une base 64 conçue pour être insérée dans un rail 66 aménagé dans le fond de l'organe principal fixe 38, 40. Le pion 62 est par exemple en matière plastique et venu de matière, par moulage, avec sa base 64.

Le ressort 60 est conçu pour exercer une poussée maximale de force comprise entre 15 et 30 Newton en position comprimée, notamment une poussée maximale de force comprise entre 15 et 19 Newton. Une valeur voisine de 17 Newton est en effet pertinente parce qu'elle est à la fois suffisamment élevée pour permettre une bonne pression sur le fromage à râper et suffisamment faible pour ne pas présenter de danger particulier à l'utilisation.

Sur la figure 2, le moulin à fromage 10 est représenté en coupe selon le plan (y, z) dans une configuration où l'organe mobile 52 du couvercle 36 est dans une position rétractée de compression maximale du ressort 60 à l'intérieur de l'organe principal fixe 38, 40. Dans cette position, l'extrémité de contact 54 de l'organe mobile 52 bute par exemple contre l'organe principal fixe 38, 40, ou alors c'est l'extrémité de butée 56 qui bute contre le fond de l'organe principal fixe 38, 40. Cette position rétractée peut être avantageusement indiquée sur le corps 12 du moulin à fromage 10, de façon visible pour l'utilisateur, par un indicateur 68 (par exemple une encoche ou une inscription « MAX », tel que cela est illustré sur les figures 1 et 3) de quantité maximale de fromage pouvant être introduit dans le réceptacle 17. On notera que la position rétractée telle qu'illustrée sur la figure 2 présente un caractère artificiel puisque cette position instable de l'organe mobile 52 ne peut être tenue en réalité que par la présence effective d'un produit alimentaire occupant l'espace intérieur libre du réceptacle 17. On pourrait toutefois imaginer des moyens de blocage en position rétractée de l'organe mobile 52 mais cela n'est pas nécessaire dans ce mode de réalisation.

Sur la figure 3, le moulin à fromage 10 est représenté en coupe selon le plan (x, z) dans une configuration où l'organe mobile 52 du couvercle 36 est dans une position développée de contact, contre les butées 58, de son extrémité de butée 56. Dans cette position développée, l'organe mobile 52 s'étend jusqu'au fond du réceptacle 17 sans toutefois toucher le tambour 20 : un léger jeu est prévu - quelques millimètres - afin que son extrémité de contact 54 soit suffisamment proche du tambour 20 pour râper autant de fromage que possible, mais ne puisse pas pour autant être en contact avec les gouges externes 24 qui pourraient l'endommager.

En pratique, pour un encombrement du moulin à fromage 10 équivalent à celui des dispositifs existants, la course maximale de l'organe mobile 52 entre ses deux positions extrêmes développée et rétractée peut être comprise entre 5 et 10 cm. Celle du ressort 60 est avantageusement légèrement supérieure, par exemple de 1 cm. Ainsi, si la course maximale de l'organe mobile 52 est choisie à 5 cm, on peut fixer la raideur du ressort 60 à une valeur voisine de 280 N/m pour qu'avec une course maximale de 6 cm il puisse exercer une force maximale de 280x0,06 = 16,8 N en position rétractée de l'organe mobile 52 et une force minimale de 280x0,01 = 2,8 N en position développée de l'organe mobile 52. Par ailleurs, la longueur du ressort 60 en position rétractée de compression maximale est par exemple choisie à 5,5 cm pour une longueur totale à vide du ressort 60 de 11,5 cm.

Il apparaît clairement qu'un dispositif pour râper un produit alimentaire tel que celui décrit précédemment présente une ergonomie améliorée en étant à la fois simple d'utilisation et de conception.

On notera par ailleurs que l'invention n'est pas limitée au mode de réalisation décrit précédemment.

Diverses variantes de réalisation peuvent être en effet envisagées dans le cadre de l'invention. Notamment, le tambour peut être entraîné en rotation par un moteur électrique plutôt que par une manivelle, le ressort peut être remplacé par d'autres moyens de rappel ou de poussée, mécaniques ou électriques, l'organe principal fixe du couvercle peut être formé d'une seule pièce moulée (l'organe mobile doit alors être inséré dans l'organe principal fixe à l'aide de moyens d'emboîtage élastique), etc.

Plus généralement, il apparaîtra à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Dispositif (10) pour râper un produit alimentaire, notamment du fromage, comportant :
- un corps (12) délimitant :
● une chambre cylindrique (18) s'étendant autour d'un axe principal (A), et
● un réceptacle (17) destiné à recevoir le produit alimentaire à râper, le réceptacle comportant un fond présentant un passage vers la chambre cylindrique (18),
- un tambour (20), disposé dans la chambre cylindrique (18) et libre en rotation autour de l'axe principal (A), comportant une paroi cylindrique râpeuse (22) contre laquelle le produit alimentaire est destiné à venir en contact grâce au passage,
**caractérisé en ce qu'**il comporte un organe mobile (52) destiné à coulisser dans le réceptacle (17) et des moyens (60) de poussée de l'organe mobile (52) vers le fond du réceptacle (17).

2. Dispositif (10) pour râper un produit alimentaire selon la revendication 1, dans lequel le réceptacle (17) comporte une ouverture (30), disposée à l'opposé du fond, par laquelle le produit alimentaire est destiné à être introduit, le dispositif comportant en outre un couvercle amovible (36) couvrant l'ouverture (30) et muni de moyens (44, 46, 48, 50) de fixation amovible sur le corps (12), ce couvercle (36) comportant l'organe mobile (52) et les moyens (60) de poussée de l'organe mobile (52) vers le fond du réceptacle (17).

3. Dispositif (10) pour râper un produit alimentaire selon la revendication 2, dans lequel les moyens (44, 46, 48, 50) de fixation du couvercle (36) sur le corps (12) du dispositif (10) comportent des moyens d'emboîtage élastique du couvercle dans le réceptacle (17).

4. Dispositif (10) pour râper un produit alimentaire selon la revendication 2 ou 3, dans lequel les moyens de poussée (60) comportent des moyens de rappel élastique comprimés entre le fond du couvercle (36) et l'organe mobile (52), notamment entre le fond du couvercle (36) et une extrémité de contact (54) de l'organe mobile (52) destinée à exercer une pression sur le produit alimentaire dans le réceptacle (17).

5. Dispositif (10) pour râper un produit alimentaire selon la revendication 4, dans lequel les moyens de rappel élastique (60) comportent un ressort conçu pour exercer une poussée maximale de force comprise entre 15 et 30 Newton en position comprimée, notamment une poussée maximale de force comprise entre 15 et 19 Newton.

6. Dispositif (10) pour râper un produit alimentaire selon la revendication 4 ou 5, dans lequel l'extrémité de contact (54) de l'organe mobile (52) présente une forme correspondant à celle du fond du réceptacle (17) en communication avec la chambre cylindrique (18).

7. Dispositif (10) pour râper un produit alimentaire selon l'une quelconque des revendications 4 à 6, dans lequel le corps (12) du dispositif (10) comporte un indicateur (68) de quantité maximale de produit alimentaire pouvant être introduit dans le réceptacle (17), cet indicateur (68) indiquant une position de l'extrémité de contact (54) de l'organe mobile (52) en position rétractée de compression maximale des moyens de rappel élastique (60) lorsque le couvercle (36) est fixé sur le corps (12).

8. Dispositif (10) pour râper un produit alimentaire selon l'une quelconque des revendications 4 à 7, dans lequel :
- le couvercle (36) comporte un organe principal fixe (38, 40) s'étendant à l'intérieur du réceptacle (17), muni des moyens (44, 46, 48, 50) de fixation sur le corps (12), et
- l'organe mobile (52) est monté libre en translation dans l'organe principal fixe (38, 40) entre une position rétractée de compression maximale des moyens de rappel élastique (60) et une position développée de contact, contre au moins une butée (58) formée dans l'organe principal fixe (38, 40), d'une extrémité (56) de l'organe mobile (52) opposée à son extrémité de contact (54).

9. Dispositif (10) pour râper un produit alimentaire selon la revendication 8, dans lequel l'organe principal fixe (38, 40) du couvercle amovible (36) comporte deux pièces rapportées l'une contre l'autre par collage ou vissage, à l'intérieur desquelles sont disposés les moyens de rappel élastique (60), la butée (58) et l'extrémité (56) de l'organe mobile (52) opposée à son extrémité de contact (54).

10. Dispositif (10) pour râper un produit alimentaire selon l'une quelconque des revendications 1 à 9, dans lequel l'une des bases circulaires de la paroi cylindrique râpeuse (22) du tambour (20) est munie d'une manivelle (28) pour l'entraînement en rotation du tambour (20) autour de l'axe principal (A) de la chambre cylindrique (18).
